Europäisches Patentamt

European Patent Office

Office européen des brevets

(11) Veröffentlichungsnummer: **0 312 886 B1**

(19)

(12) **EUROPÄISCHE PATENTSCHRIFT**

(45) Veröffentlichungstag der Patentschrift: **12.05.93**

(21) Anmeldenummer: **88116842.1**

(22) Anmeldetag: **11.10.88**

(51) Int. Cl.⁵: **C03C 17/25**

(54) **Flüssige Zubereitung zur Herstellung elektrisch leitfähiger und infrarot reflektierender fluordotierter Zinnoxidschichten auf Glas- oder Glaskeramikoberflächen.**

(30) Priorität: **21.10.87 DE 3735574**

(43) Veröffentlichungstag der Anmeldung:
**26.04.89 Patentblatt 89/17**

(45) Bekanntmachung des Hinweises auf die
Patenterteilung:
**12.05.93 Patentblatt 93/19**

(84) Benannte Vertragsstaaten:
**AT BE CH DE ES FR GB LI LU NL**

(56) Entgegenhaltungen:
DE-A- 2 613 839
US-A- 2 566 346

CHEMICAL ABSTRACTS, Band 103, nr. 12,
September 1985, Seite 262, Zusammenfassung Nr. 91947y, Columbus, Ohio, US; & JP-
A-60 081 045 (MATSUSHITA ELECTRIC IN-
DUSTRIAL CO., LTD) 09-05-1985

(73) Patentinhaber: **Th. Goldschmidt AG**
**Goldschmidtstrasse 100 Postfach 101461**
**W-4300 Essen 1(DE)**

(72) Erfinder: **Ruf, Erich, Dr.**
**Auf'm Gartenstück 10**
**W-4300 Essen(DE)**

EP 0 312 886 B1

**Beschreibung**

Die Erfindung betrifft eine flüssige Zubereitung zur Herstellung von elektrisch leitfähigen und infrarot reflektierenden fluordotierten Zinnoxidschichten auf Glas − oder Glaskeramikoberflächen mit einem Gehalt an gegebenenfalls organische Gruppen aufweisenden Zinn − IV − chloriden.

Es ist bekannt, daß fluordotierte Zinnoxidschichten auf Glasoberflächen den elektrischen Widerstand der vergüteten Oberflächen herabsetzen und die Infrarotreflexion erhöhen. Zur Herstellung dieser Zinn − oxidoberflächenschichten bringt man eine geeignete Zinnverbindung gleichzeitig mit einer Fluor abgeben − den Verbindung in Kontakt mit der auf Temperaturen von 400 bis 800˚C erhitzten Oberfläche. Die Zinnverbindung (Basisverbindung) bildet auf der Oberfläche des Glases oder der Glaskeramik eine zusammenhängende Schicht aus Zinnoxid. Die Fluor abgebende Verbindung (Dotierungsmittel) bewirkt eine Dotierung der entstehenden oder erhaltenen Zinnoxidschicht mit Fluor. Diese Dotierung ist für die Ausbil − dung der gewünschten Eigenschaften wie Leitfähigkeit und Infrarotreflexion von entscheidender Bedeutung.

Das Verfahren zur Herstellung dieser fluordotierten Zinnoxidschichten auf geeigneten Oberflächen kann in verschiedener Weise durchgeführt werden. Man kann die zinn − und fluorenthaltenden Verbindungen aus der Gasphase auf die zu vergütende Oberfläche einwirken lassen oder die Oberfläche mit einem Gasstrom, der die Verbindungen in Form eines feinen Pulvers enthält, beaufschlagen. Verfahrenstechnisch besonders einfach ist das Aufsprühen von Lösungen dieser Verbindungen in einem geeigneten Lösungsmittel durchzuführen.

Zu diesem Stand der Technik gibt es eine umfangreiche Patentliteratur, aus der stellvertretend die folgenden Offenlegungs − oder Patentschriften genannt werden sollen:

Aus der DE − PS 30 10 077 ist ein Verfahren zum Aufbringen einer Infrarotstrahlen reflektierenden Schicht aus einem mit einem Halogen, vorzugsweise mit Fluor, dotiertem Zinnoxid durch Pyrolyse auf eine Glasoberfläche, bei dem auf die eine Temperatur von 400 bis 650˚C aufweisende Glasoberfläche eine organische Zinnverbindung (Basisverbindung) in Pulverform mit einer Teilchengröße von weniger als 20 $\mu$m als Suspension in einem gasförmigen Trägerstrom in Gegenwart einer Halogenverbindung (Dotierungsmittel) aufgebracht wird, wobei als Halogenverbindung (Dotierungsmittel) eine pulverförmige Verbindung verwendet wird, die in dem gasförmigen Trägerstrom für die Zinnverbindung (Basisverbindung suspendiert ist. Beispiel einer Basisverbindung ist Dibutylzinnoxid, während als Dotierungsmittel Dibutyl − zinndifluorid genannt wird. Basisverbindung und Dotierungsmittel können auch in einer einzigen Verbindung wie z.B. Ammoniumdibutylzinntetrafluorid verwirklicht sein. Es hat sich jedoch gezeigt, daß die reprodu − zierbare Ausbildung eines gleichmäßigen Stromes von Trägergas und pulverförmigen Verbindungen nur Schwierig zu gewährleisten ist, so daß Oberflächenschichten mit stets wechselnden Eigenschaften erhalten werden.

Aus der DE − PS 28 06 468 ist ein Verfahren bekannt, bei dem als Basisverbindung Dibutylzinnoxid in Form eines Pulvers in einem wasserfreien Luftstrom dispergiert verwendet wird, während das Dotierungs − mittel eine gasförmige Fluorverbindung ist, die der Dispersion kurz vor Erreichen der Austrittsdüse zugemischt wird. Als gasförmige Fluorverbindungen werden wasserfreier Fluorwasserstoff, $BF_2$, $BrF_5$, $ClF_3$, $SiF_4$, $WF_6$ und $MoF_6$ genannt. Bei diesen gasförmigen Fluorverbindungen besteht die Gefahr der Verätzung der Oberfläche des zu vergütenden Glases oder der Glaskeramik. Außerdem sind bei Verwendung dieser chemisch aggressiven und toxischen Gase umfangreiche Sicherheitsvorkehrungen zu treffen.

Das Aufbringen geeigneter Zinnverbindungen und Dotierungsmittel aus der Gasphase kann der EU − OS 0 112 780 entnommen werden. Bei diesem Verfahren wird eine gasförmige Mischung von Butylzinntrichlo − rid (Basisverbindung) und Dichlordifluormethan (Dotierungsmittel) verwendet. Auch hier treten Dosierungs − probleme, die zu Oberflächen ungleicher und unzureichender Eigenschaften führen, auf. Außerdem ist die Verwendung von Dichlordifluormethan aus Umweltgründen unerwünscht.

In der US − PS 4 293 594 ist ein Verfahren offenbart, bei dem man eine gasförmige Mischung von Dimethylzinndichlorid und Dimethylzinndifluorid in einem Trägergas auf die zu vergütenden Oberflächen aufbringt. Diese Verbindungen sind jedoch fest und lassen sich nur bei hohen Temperaturen in die Gasphase überführen.

Eine flüssige Zubereitung zur Herstellung hochwertiger, fluordotierter Zinnoxidschichten auf Glasober − flächen kann der EU − OS 0 158 399 entnommen werden. Die Zubereitung besteht aus

a) 1 bis 30 Gew. − % eines Dotierungsmittels auf der Basis einer organischen Fluorverbindung, ausge − wählt aus Trifluoressigsäure oder deren Anhydrid, Trifluoressigsäureethylester, Trifluorethanol und Pen − tafluorpropionsäure, und

b) 70 bis 99 Gew. − % einer Organozinnverbindung, ausgewählt aus Alkylzinntrichlorid, Dialkylzinndi − chlorid, Alkyldichlorzinnacetat, Alkylchlorzinndiacetat, einem Ester des Zinnchlorids oder Zinntetrachlorid.

Auch dieses Verfahren kann noch nicht befriedigen, da die fluorhaltigen Dotierungsmittel in der Mehrzahl leicht siedende Flüssigkeiten darstellen, an der heißen Glasoberfläche größtenteils verdampfen und deshalb nicht in die Zinnoxidschicht eingebaut werden. Bedingt durch die Verdampfungswärme dieser Dotierungsmittel wird die heiße Substratoberfläche relativ stark abgekühlt, was zu einer Verschlechterung der Eigenschaften der aufgebrachten Schicht führt.

Im Falle der Pentafluorpropionsäure erfolgt die Zersetzung an der heißen Glasoberfläche nicht schnell genug, so daß auch hier die Zinnoxidschicht ungenügende Funktionswerte aufweist. Hinzu kommt, daß diese Verbindungen sehr teuer und gesundheitsgefährdend sind.

Der vorliegenden Erfindung liegt die Aufgabe zugrunde, Lösungen von Zinnverbindungen als Basisver‐ bindungen und fluorenthaltenden Dotierungsmitteln zu finden, welche verfahrenstechnisch einfach zu handhaben sind, möglichst keine aggressiven oder toxischen Verbindungen enthalten, deren Bestandteile leicht zugängliche, artverwandte und möglichst billige Chemikalien sind und die dennoch hochwertige Oberflächenschichten auf Glas oder Glaskeramik zu erzeugen gestatten.

Diese Eigenschaften konnten überraschenderweise bei einer Zubereitung gefunden werden, welche gegebenenfalls organische Gruppen aufweisende Zinn‐IV‐chloride als Basisverbindungen und erfin‐ dungsgemäß als einziges Dotierungsmittel Zinn‐II‐fluorid enthält.

Dies war insbesondere deshalb überraschend, da aus der US‐PS 2 566 346 bekannt ist, daß bei Einsatz von Lösungen, die anorganische und/oder organische Zinn‐IV‐chloride als Basisverbindungen und Antimonfluoride als Dotierungsmittel enthalten, im Sprühzerstäubungsverfahren auf die Oberfläche von Gläsern aufgebracht, Zinnoxidschichten entstehen, die keine nennenswerten Infrarotreflexions‐ bzw. keine niedrigen Flächenwiderstandswerte aufweisen.

Hinzu kommt ferner, daß wäßrige bzw. wäßrig alkoholische Zinn‐II‐fluorid‐Lösungen allein, also ohne zusätzliche Anwesenheit der gegebenenfalls organische Gruppen aufweisenden Zinn‐IV‐chloride sich nur als sehr verdünnte Lösungen auf die Glasoberfläche auftragen lassen. Die hierbei resultierenden Zinnoxidschichten weisen völlig ungenügende Werte der Infrarotreflexion und des Flächenwiderstandes auf. Darüber hinaus zersetzen sich solche Lösungen von Zinn‐II‐fluorid als alleinige Komponente schlecht an der heißen Substratoberfläche, so daß sich bei steigender Anwendungsmenge auf der Substratoberfläche störende Zersetzungsrückstände aufbauen.

Es ist dabei besonders vorteilhaft, daß die Lösungen frei von Flußsäure und sauren Fluoridverbindun‐ gen sind und damit weder Materialien angreifen oder beschädigen noch Gesundheitsgefährdungen verur‐ sachen.

Bevorzugtes Beispiel einer erfindungsgemäßen Zubereitung ist eine Lösung, die aus

30 bis 89 Gew.‐% gegebenenfalls organische Gruppen aufweisenden Zinn‐IV‐chloriden,

1 bis 5 Gew.‐% Zinn‐II‐fluorid,

10 bis 55 Gew.‐% eines polaren organischen Lösungsmittels und

0 bis 10 Gew.‐% Wasser

besteht.

Geeignete Basisverbindungen sind neben Zinntetrachlorid Alkylzinntrichlorid, Dialkylzinndichlorid, Dial‐ kylchlorzinnacetat, Alkylchlorzinndiacetat, wobei der Alkylrest jeweils ein Rest mit 1 bis 8, insbesondere 4 Kohlenstoffatomen und bevorzugt der n‐Butylrest ist.

Besonders bevorzugt ist deshalb eine erfindungsgemäße Zubereitung, welche aus

30 bis 89 Gew.‐% Zinntetrachlorid oder Alkylzinntrichlorid,

1 bis 5 Gew.‐% Zinn‐II‐fluorid,

10 bis 55 Gew.‐% eines polaren organischen Lösungsmittels und

0 bis 10 Gew.‐% Wasser

besteht.

Insbesondere bevorzugt ist eine Zubereitung der Zusammensetzung

30 bis 89 Gew.‐% Zinntetrachlorid oder Butylzinntrichlorid,

1 bis 5 Gew.‐% Zinn‐II‐fluorid,

10 bis 55 Gew.‐% Ethanol und/oder Essigsäureethylester und

0 bis 10 Gew.‐% Wasser.

Als polare organische Lösungsmittel kommen niedere aliphatische Alkohole, insbesondere Ethanol und niedrig siedende Ester, insbesondere Essigsäureethylester oder Ketone wie Methylisobutylketon in Frage.

Bei Verwendung von Ethanol als Lösungsmittel ist es möglich, wasserfreie Zubereitungen herzustellen. Entsprechende Lösungen von gegebenenfalls organische Gruppen aufweisenden Zinn‐IV‐chloriden in Ethanol werden nach Zugabe der erforderlichen Menge festen Zinn‐II‐fluorids zur Lösung der Basisver‐ bindung und etwa 1‐ bis 2stündigem Rühren erhalten.

Eine wasserfreie Zubereitung kann somit die Zusammensetzung

30 bis 89 Gew. – % Zinntetrachlorid oder Butylzinntrichlorid,

1 bis 5 Gew. – % Zinn – II – fluorid,

10 bis 65 Gew. – % Ethanol

haben.

Ein weiterer Gegenstand der vorliegenden Erfindung besteht in dem Verfahren zur Herstellung von elektrisch leitfähigen und infrarot reflektierenden Zinnoxidschichten auf Glas – oder Glaskeramik durch Aufsprühen organischer Lösungen von gegebenenfalls organische Gruppen enthaltenden Zinn – IV – chlori – den als Zinnoxidschichtbildner und Fluor enthaltenden Dotierungsmitteln auf die Oberfläche von Glas oder Glaskeramik, welche eine Temperatur von 400 bis 800 ˚C aufweisen, und ist dadurch gekennzeichnet, daß man Lösungen verwendet, welche als einziges Dotierungsmittel Zinn – II – fluorid enthalten. Vorzugsweise verwendet man diejenigen Zubereitungen, die bereits als bevorzugt bezeichnet worden sind.

Die erfindungsgemäße Zubereitung wird zweckmäßig mit einer Sprühpistole im Sprühzerstäubungs – verfahren unter Verwendung von Preßluft auf das erhitzte Substrat, insbesondere Glas, aufgetragen. Das Substrat soll dabei eine Temperatur von 400 bis 800 ˚C haben. Die Temperatur des Substrates muß jedoch unterhalb seiner jeweiligen Schmelz – bzw. Erweichungstemperatur liegen.

Durch Pyrolyse wird auf der Substratoberfläche ein mit Fluor dotierter Zinnoxidfilm erzeugt. Dieser Film hat die Eigenschaften einer Halbleiterschicht. Je nach angewendeten Mengen der erfindungsgemäßen Zubereitung wird ein Film mit einer Schichtdicke von 100 bis 1000 nm erhalten. Entsprechend dem erfindungsgemäßen Verfahren sind daher auf Glas selektive Transparentbeschichtungen herstellbar, die für das sichtbare Licht weitgehend (75 bis 83 %) durchlässig sind, während Infrarotstrahlen oberhalb ca. 2500 nm Wellenlänge je nach Schichtdicke zu 80 bis 90 % reflektiert werden.

Die nachfolgenden Beispiele dienen der weiteren Erläuterung der Erfindung.

Beispiel 1

In eine 100 – ml – Glasflasche, die mit Magnetrührer versehen ist, werden

20,0 g Ethylalkohol,

70,0 g Butylzinntrichlorid und

10,0 g einer 25 gew. – %igen wäßrigen $SnF_2$ – Lösung

gegeben und unter Rühren und Kühlen gemischt.

5 ml dieser Lösung werden in den Becher einer Sprühpistole (Düsendurchmesser 1 mm; Sprühdruck 4 bar) gefüllt und auf eine Flachglasscheibe (160 x 180 x 6 mm), die zuvor in einem Ofen 5 Minuten lang bei 700 ˚C Ofentemperatur aufgeheizt worden war, versprüht. Nach dem Erkalten weist die Glasscheibe folgende Werte auf:

```
Schichtdicke:          400    nm
Infrarotreflexion:     83,0 %
Flächenwiderstand:      8,5 Ohm/Quadrat
```

Beispiel 2

In eine 100 – ml – Glasflasche, die mit Magnetrührer versehen ist, werden

52,0 g Ethanol

46,1 g $SnCl_4$ und

1,9 g $SnF_2$ in Pulverform

gegeben und unter Rühren und Kühlen 2 Stunden gemischt. Die so erhaltene Lösung weist eine leichte Trübung auf, die durch Filtrieren entfernt wird.

5 ml dieser Lösung werden zur Vergütung einer Glasoberfläche entsprechend Beispiel 1 verwendet. Nach dem Erkalten weist die Glasscheibe folgende Werte auf:

```
Schichtdicke:            350   nm
Infrarotreflexion:       80,0 %
Flächenwiderstand:       17,0 Ohm/Quadrat
```

Beispiel 3

In eine 100 – ml – Glasflasche, die mit Magnetrührer versehen ist, werden
70,0 g Butylzinntrichlorid,
22,0 g Essigsäureethylester,
6,0 g Wasser und
2,0 $SnF_2$ in Pulverform
gegeben und unter Rühren und Kühlen gemischt. Die Lösung wird klar filtriert.

5 ml dieser Lösung werden wie in Beispiel 1 zur Vergütung einer Glasplatte verwendet. Nach dem Erkalten weist die Glasscheibe folgende Werte auf:

```
Schichtdicke:            400   nm
Infrarotreflexion:       83,0 %
Flächenwiderstand:        8,3 Ohm/Quadrat
```

## Patentansprüche

1. Flüssige Zubereitung zur Herstellung von elektrisch leitfähigen und infrarot reflektierenden fluordotierten Zinnoxidschichten auf Glas – oder Glaskeramikoberflächen mit einem Gehalt an Zinn – IV – chlorid, welches organische Gruppen aufweisen kann, dadurch gekennzeichnet, daß sie aus
   30 bis 89 Gew. – % Zinntetrachlorid oder Alkylzinntrichlorid
   1 bis 5 Gew. – % Zinn – II – fluorid
   10 bis 55 Gew. – % eines polaren organischen Lösungsmittels und
   0 bis 10 Gew. – % Wasser
   besteht.

2. Zubereitung nach Anspruch 1, dadurch gekennzeichnet, daß sie aus
   30 bis 89 Gew. – % Zinntetrachlorid oder Butylzinntrichlorid
   1 bis 5 Gew. – % Zinn – II – fluorid
   10 bis 55 Gew. – % Ethanol und/oder Essigsäureethylester und
   0 bis 10 Gew. – % Wasser
   besteht.

## Claims

1. Liquid composition for the production of electro – conductive, infra – red – reflective, fluorine – doped tin oxide coatings on glass or glass – ceramic surfaces, containing tin(IV) chloride which may contain organic groups, characterised in that it comprises
   from 30 to 89% by weight of tin tetrachloride or alkyltin trichloride
   from 1 to 5% by weight of tin(II) fluoride,
   from 10 to 55% by weight of a polar organic solvent, and
   from 0 to 10% by weight of water.

2. Composition according to Claim 1, characterised in that it comprises
   from 30 to 89% by weight of tin tetrachloride or butyltin trichloride,
   from 1 to 5% by weight of tin(II) fluoride,
   from 10 to 55% by weight of ethanol and/or ethyl acetate, and

from 0 to 10% by weight of water.

**Revendications**

1.  Préparation liquide pour fabriquer des couches d'oxyde d'étain électriquement conductrices, réfléchis – sant les infra – rouges et dopées au fluor, sur des surfaces vitreuses ou vitrocéramiques, contenant du chlorure d'étain – IV pouvant comporter des groupes organiques, caractérisée en ce qu'elle a la composition suivante :
    30 à 89 % en poids de chlorures d'étain – IV comportant éventuellement des groupes organiques,
    1 à 5 % en poids de fluorure d'étain – II,
    10 à 55 % en poids d'un solvant organique polaire, et
    0 à 10 % en poids d'eau.

2.  Préparation selon la revendication 1, caractérisée en ce qu'elle a la composition suivante :
    30 à 89 % en poids de tétrachlorure d'étain ou de trichlorure de butylétain,
    1 à 5 % en poids de fluorure d'étain – II,
    10 à 55 % en poids d'éthanol et/ou d'acétate d'éthyle, et
    0 à 10 % en poids d'eau.

6